# EUROPÄISCHE PATENTSCHRIFT

(11) **EP 3 201 293 B1**
(45) Veröffentlichungstag und Bekanntmachung des Hinweises auf die Patenterteilung: **01.05.2019**
(21) Anmeldenummer: 15823491.4
(22) Anmeldetag: 24.09.2015
(51) Int. Cl.: C10B 41/08, C10B 47/04, C10B 53/07, C10B 47/06

(54) **VERFAHREN UND VORRICHTUNG ZUR DURCHFÜHRUNG EINER PYROLYSE**
METHOD AND DEVICE FOR CARRYING OUT A PYROLYSIS
PROCÉDÉ ET DISPOSITIF PERMETTANT D'EFFECTUER UNE PYROLYSE

(30) Priorität: 01.10.2014 DE 102014014816
(43) Veröffentlichungstag der Anmeldung: 09.08.2017
(73) Patentinhaber: Projahn, Frank, 39112 Magdeburg (DE)
(72) Erfinder: GROTHE, Jamina, 39307 Kade (DE); CAI, Xiaomei, 344600 Li Chuan Provinz Jiang Xi (CN); PROJAHN, Frank, 39112 Magdeburg (DE)
(74) Vertreter: Kietzmann, Manfred
(86) Internationale Anmeldenummer: PCT/DE2015/000488
(87) Internationale Veröffentlichungsnummer: WO 2016/050234

(56) Entgegenhaltungen:
- WO-A1-01/29149
- DE-A1-102008 030 983
- DE-A1-102012 023 176
- DE-A1-102012 109 874

## Beschreibung

Die Erfindung betrifft eine umweltschonende und saubere industrielle Anlage zum Verschwelen von kohlenstoffhaltigen Substanzen, insbesondere von Altreifen zur Gewinnung von zum Beispiel Kohlenstoffgranulat, Pyrolyseöl, Pyrolysegas und metallischen Bestandteilen.

Derartige Anlagen sind bekannt.

So wird in der WO 01/29149 A1 Verfahren zur Rückgewinnung von Gasen, die während einer pyrolytischen Behandlung erzeugt werden, vorgeschlagen, wobei zwei Pumpsysteme vor einem Gassammler Verwendung finden. Das erste Pumpsystem dient der Erzeugung eines Vakuums im Reaktor vor der Pyrolyse. Das zweite Pumpsystem wird zum Füllen des Gasbehälters bei der Pyrolyse eingesetzt, wobei beim Erreichen einer THC-Rate kleiner oder gleich 60% das Gas zu einer Fackel umgeleitet wird.

Bei der DE 10 2012 023 176 A1 geht es um den O₂ - Entzug bei der Verschwelung. An ein Absaugrohr aus dem Reaktor ist eine Pumpe angeschlossen, die Gas aus dem Reaktor saugt, um darin ein Vakuum herzustellen. Durch das Vakuum wird der Sauerstoffanteil in der Luft, die sich während eines Batchlaufes noch im Aufnahmeraum befindet,
erheblich reduziert oder vollständig entfernt. Durch den Sauerstoffmangel verbrennen die polymeren Bestandteile im Abfallstoff nicht, sondern sie wandeln sich bei ausreichend hohen Temperaturen über 580°C insbesondere in Russmoleküle um, die einen sehr hohen Karbongehalt aufweisen.

Aus der DE 10 2008 030 983 B4 ist ein Verfahren zur Durchführung einer Mitteltemperaturpyrolyse bekannt, bei dem der mit einem verschwelbaren Gut gefüllte Reaktorbehälter in einer ersten Phase der Pyrolyse mittels Heizelementen auf eine erste Heiztemperatur zwischen 650°C und 820°C aufgeheizt wird,
mittels eines Sensors zur Detektion der Pyrolysegasentwicklung eine Pyrolysegasentwicklung detektiert wird,
mittels einer Steuereinheit bei Detektion einer Pyrolysegasentwicklung die durch die Heizelemente generierbare Temperatur in einer zweiten Phase der Pyrolyse auf zwischen 450°C und 520°C reduziert wird,
mittels eines Temperatursensors eine vorgegebene Pyrolysegastemperatur vor dem Kondensatabscheider oder der Kühlschlange detektiert wird und
bei Detektion einer vorgegebenen Pyrolysegastemperatur, vorzugsweise zwischen 100°C und 110°C, die Heizung mit Heizelementen eingestellt wird.

Versuche haben gezeigt, dass unabhängig vom Zustand der für die Pyrolyse eingesetzten Altreifen und ohne nachträgliche Aufbereitung Kohlenstoffqualitäten mit 60 BET für Ölaufsaugzwecke bei Havarien, mit 106 BET für Pflanzensubstrat und mit 200 BET für Aktivkohle erreichbar sind (BET = Stickstoffoberfläche m²/Gramm).

Dieses funktionierende Verfahren hat den Nachteil, dass es aufgrund der Temperaturen in der ersten Phase der Pyrolyse energieintensiv arbeitet.

Nun sind im Stand der Technik bereits Anlagen vorgeschlagen worden, die mit niedrigen Temperaturen arbeiten.

So wurden in der DE 100 15 721 A1 ein Verfahren und eine Vorrichtung vorgeschlagen, bei der Altreifen ohne Vorbehandlung einer Pyrolyse bei maximal 500°C unterzogen werden sollen.

In der WO 00/11110 A1 werden vorbehandelte zerstückelte Altreifen als Ausgangsstoff eingesetzt. Das Aufheizen erfolgt mit einem Gas, das aufgeheizt in den Pyrolyseofen und über Öffnungen in den Reaktor geleitet, durch eine Gaszugsleitung wieder abgeführt und zumindest teilweise wieder als Heizgas aufbereitet in den Pyrolyseofen geleitet wird.

Es wird bei Temperaturen von 450°C - 600°C gearbeitet.

Der Prozess beginnt mit dem Einlass von aufgeheiztem Stickstoff, dem sich mit Beginn der Pyrolyse Pyrolysegas beimischt. Die Pyrolyseanlage verfügt über Messeinrichtungen für die Analyse der Zusammensetzung des Pyrolysegases und dessen Temperaturmessung, wobei die Messewerte zur Steuerung des Aufheizens der des umlaufenden Gases eingesetzt werden.

Mit der WO 2007/006280 A2 wird vorgeschlagen, die Temperatur in einem nicht näher erläuterten Thermoofen in 3 zeitlich definierten Stufen auf 480°C - 600°C zu erhöhen, wobei innerhalb der Stufen die Temperatur konstant sein soll. Die Temperaturen im Reaktor sollen regelbar sein und die Aufrechterhaltung der Temperatur im Reaktor soll über Thermostate erfolgen. Ein am Reaktordeckel angeordneter Reflektor sorgt für eine gute Umwälzung von aufsteigenden Partikeln des Pyrolysegutes.

Der Nachteil dieser Technologien, soweit sie überhaupt realisiert wurden, besteht darin, dass die erzielbaren Kohlenstoffqualitäten weit unter denen des erstgenannten Verfahrens liegen.

Aufgabe der Erfindung ist es, die erfolgreich erprobte Anlage gemäß der DE 10 2008 030 983 B4 dahingehend zu verbessern, dass energieeffizienter gearbeitet werden kann, ohne dass dies auf Kosten der Qualität des Kohlenstoffes geht.

Gelöst wird diese Aufgabe mit den Merkmalen des Vorrichtungsanspruches 1 und des Verfahrensanspruches 5. Vorteilhafte Ausgestaltungen sind Gegenstand der Unteransprüche.

Erfindungsgemäß wird bei einer Vorrichtung zur Durchführung einer Mitteltemperaturpyrolyse mit einem in einem Pyrolyseofen auf eine Temperatur bis 620°C erhitzbaren Reaktorbehälter zylinderförmiger Form, der oben offen und mit einem Deckel verschließbar ist, wobei der Deckel mindestens eine mit einer Gasabzugsleitung aus den Pyrolyseofen verbindbare Gasaustrittsöffnung aufweist und unterhalb des Deckels mindestens ein sich an der Reaktorbehälterinnenwand abstützendes gelochtes Prallblech befindet,
mit mindestens einer mit der Gasabzugsleitung verbundenen Kühlschlange zum Kondensieren des Pyrolyseöls,
mit der Kühlschlange nachgeordnet mindestens einem Pyrolyseölauffangbehälter und mit einem Gassammler für das verbleibende Gas sowie
mit einer Steuereinheit zur Steuerung und Regelung der Heiztemperatur, wobei die Steuereinheit mindestens mit einem Temperatursensor zur Bestimmung der Pyrolysegastemperatur in der Gasabzugsleitung nahe dem Austritt der Gasabzugsleitung aus dem Pyrolyseofen gekoppelt ist, vorgeschlagen, dass
dem Gassammler ein Verdichter nachgeordnet ist, der ab dem Erreichen einer vorgegebenen und von dem Temperatursensor detektierten Pyrolysegastemperatur gesteuert von der Steuereinheit einen konstanten oder nahezu konstanten Volumenstrom des Pyrolysegases aus dem Reaktorbehälter bei einem konstanten oder nahezu konstanten Systemdruck einstellt.

Der eingestellte Systemdruck liegt bevorzugt unter 60 mbar.

Durch die niedrigere Heiztemperatur treten wesentliche Energieeinsparungen ein und durch die Volumenstromsteuerung erhöht sich die Verweildauer des Pyrolysegases im Reaktorbehälter.

Das hat zufolge, dass keine oder nur sehr geringe Mengen an Kondenswasser anfallen, das Prozessgas nicht mehr getrocknet und entteert werden muss, sondern umgehend verstromt werden kann z.B. mittels eines Blockheizkraftwerkes (BHKW) und der Kohlenstoff weniger verkokt. Die Qualität des Kohlenstoffes ist in Bezug auf die Veredelung zu Carbon Black (Industrieruß) der Kategorien N550 bis N770 in seiner Qualität verbessert und besser mahlbar.

Ferner hat das Pyrolyseöl eine verbesserte Viskosität, ist flüssiger und sauberer in Bezug auf die BTEX-Werte (Benzol, Toluol, Ethylbenzol und Xylole).

Vorteilhaft für das Erzielen des konstanten oder nahezu konstanten Volumenstrom ist es auch, wenn der Rohrquerschnitt, der den Pyrolyseölauffangbehälter mit dem Gassammler verbindet, kleiner ist als der Querschnitt der Kühlschlange und der Querschnitt der Kühlschlange jeweils kleiner ist als der der Gasabzugsleitung.

Die durch die Steuereinheit einstellbare Temperatur im Reaktorbehälter beträgt bevorzugt 420°C - 620°C.

In einer vorteilhaften Ausgestaltung ist vorgesehen, dass zwei Kühlschlangen mit der Gasabzugsleitung verbunden sind, die in unterschiedliche aber miteinander bodenseitig verbundene Kammern des Pyrolyseölauffangbehälters münden und eine Bypassleitung zu den Kühlschlangen angeordnet ist, die über ein von der Steuereinheit steuerbares Ventil mit der Gasabzugsleitung koppelbar ist und die in eine Kammer des Pyrolyseölauffangbehälters mündet, wobei die Kühlschlange, die in die andere Kammer des Pyrolyseölauffangbehälters mündet eingangsseitig ein Ableitrohr aufweist, das durch ein durch die Steuereinheit schaltbares Schaltventil mit der Gasabzugsleitung koppelbar ist.

Durch diese Maßnahme wird kurzeitig heißes Pyrolysegas dem Prozess entzogen und kann auskondensiertes kühleres Pyrolysegas aus einer Kühlschlange in den Reaktorbehälter zurückgeführt werden. Dadurch wird ebenfalls erreicht, dass der Kohlenstoff weniger verkokt.

Bevorzugt ist in der Bypassleitung ein Ausgleichsbehälter angeordnet.

Das Verfahren zum Betrieb der vorbeschriebenen Vorrichtung sieht vor, dass
der mit verschwelbarem Gut gefüllte Reaktorbehälter auf eine Temperatur zwischen 420°C - 620°C im Reaktorofen erhitzt wird, wobei die Pyrolysegastemperatur in der Gasabzugsleitung detektiert wird und die Steuereinheit diese Temperatur über die Pyrolysedauer konstant hält mit Erreichen der Innentemperatur im Reaktorbehälter zwischen 420°C und 620°C durch den Verdichter ein konstanter oder nahezu konstanter Systemdruck von kleiner 60 mbar eingestellt wird, was zu einem konstanten oder nahezu konstanten Volumenstrom des Pyrolysegases aus dem Reaktorbehälter bei gleichzeitig erhöhter Verweildauer des Pyrolysegases im Reaktorbehälter führt.

Die Ausgestaltung des Verfahrens sieht weiter vor, dass, wenn durch den Temperatursensor das Überschreiten einer vorgegebenen Temperatur aus dem Bereich zwischen 420°C - 620°C detektiert und der Steuereinheit signalisiert wird, die Steuereinheit als Reaktion auf dieses Signal das Ventil in die Bypassleitung öffnet, so dass ein Teil der heißen Pyrolysegase in die Bypassleitung und den hier vorhandenen Ausgleichsbehälter strömen,
zeitverzögert durch die Steuereinheit das Schaltventil des Ableitrohres geöffnet und das Ventil in die Bypassleitung geschlossen wird, so dass kühles nichtkondensierbares Gas aus der mit dem Ableitrohr verbundenen Kühlschlange in den Reaktorbehälter gedrückt wird und sich eine Temperatur unterhalb der vorgegebenen Temperatur aus dem Bereich zwischen 420°C - 620°C einstellt.

Durch die Verwendung des vorrichtungsseitig beschriebenen Pyrolysölauffangbehälters mit zwei Kammern ist verfahrensseitig eine kurzzeitige Druckerhöhung in der Kammer des Pyrolyseölauffangbehälters, in die die Bypassleitung mündet, erzielbar, so dass Pyrolyseöl in die andere Kammer überströmt, wodurch nichtkondensierbare Gase in der Kühlschlange, die in diese Kammer mündet in die entgegengesetzte Volumenstromrichtung und damit über das Ableitrohr in die Gasabzugsleitung und den Reaktorbehälter gedrückt werden.

Die Erfindung soll anhand der Zeichnungen erläutert werden: Es zeigen:
- Fig. 1:: den apparativen Aufbau,
- Fig. 2:: einen Pyrolyseölauffangbehälter,
- Fig. 3:: Stand der Technik gemäß DE 10 2008 030 983 B4

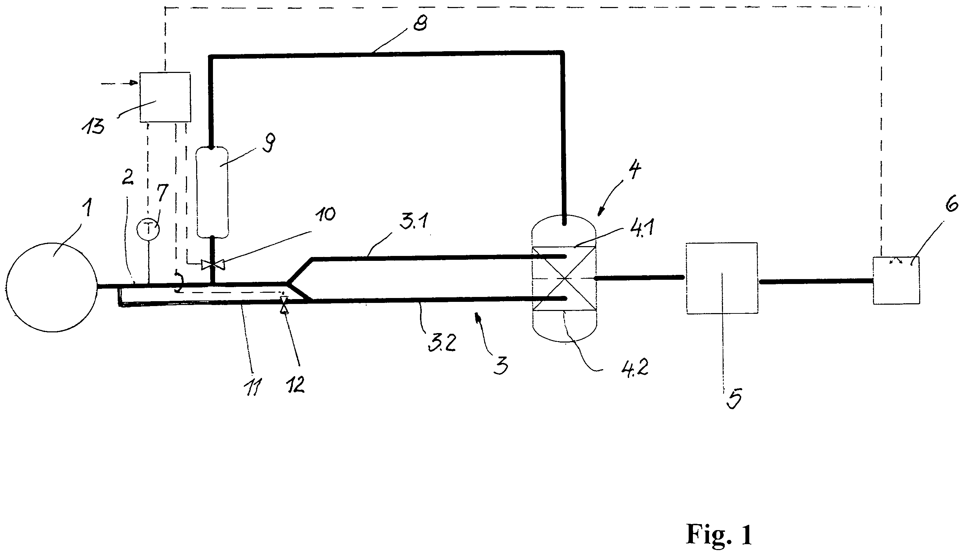

**Fig. 1** zeigt den apparativen Aufbau vom Reaktorbehälter 1 bis zum Verdichter 6.
Der Reaktorbehälter 1 wird zur Durchführung einer Mitteltemperaturpyrolyse in einem Pyrolyseofen auf eine Temperatur zwischen 420°C - 620°C erhitzt. Der Reaktorbehälter 1 ist von zylinderförmiger Form, oben offen und mit einem Deckel in Form eines gewölbten Bodens verschließbar, wobei der Deckel mindestens eine mit einer Gasabzugsleitung 2 aus dem Pyrolyseofen verbindbare Gasaustrittsöffnung aufweist und unterhalb des Deckels mindestens ein sich an der Reaktorbehälterinnenwand abstützendes gelochtes Prallblech 14 befindet.

Die Gasabzugsleitung 2 ist mit zwei parallel angeordneten Kühlschlangen 3.1, 3.2 zum Kondensieren des Pyrolyseöls verbundenen.

Den Kühlschlangen 3.1, 3.2 sind nachgeordnet ein Pyrolyseölauffangbehälter 4 mit zwei Kammern 4.1, 4.2, so dass jede Kühlschlange 3.1, 3.2 in eine Kammer 4.1 oder, 4.2 mündet, ein Gassammler 5 für das verbleibende Gas sowie ein Verdichter 6.

Ferner ist eine Steuereinheit 13 zur Steuerung und Regelung der Heiztemperatur vorhanden, wobei die Steuereinheit mit einem Temperatursensor 7 zur Bestimmung der Pyrolysegastemperatur in der Gasabzugsleitung 2 nahe dem Austritt der Gasabzugsleitung 2 aus dem Pyrolyseofen gekoppelt ist.

Weiter ist die Steuereinheit 13 mit dem dem Gassammler 5 nachgeordneten Verdichter 6 verbunden, durch den ab dem Erreichen einer vorgegebenen und von dem Temperatursensor 7 detektierten Pyrolysegastemperatur ein konstanter oder nahezu konstanter Volumenstrom des Pyrolysegases aus dem Reaktorbehälter 1 bei einem konstanten oder nahezu konstanten Systemdruck eingestellt wird.

Die beiden Kühlschlangen 3.1, 3.2, die mit der Gasabzugsleitung 2 verbunden sind, münden in unterschiedliche aber miteinander bodenseitig verbundene Kammern 4.1, 4.2 des Pyrolyseölauffangbehälters 4. Weiter ist eine Bypassleitung 8 zu den Kühlschlangen 3.1, 3.2 angeordnet, die über ein durch die Steuereinheit 13 steuerbares Ventil 10 mit der Gasabzugsleitung 2 koppelbar ist und die in eine Kammer 4.1 des Pyrolyseölauffangbehälters 4 mündet.

Die Kühlschlange 3.2, die in die andere Kammer 4.2 des Pyrolyseölauffangbehälters 4 mündet, weist eingangsseitig ein Ableitrohr 11 auf, das durch ein durch die Steuereinheit 13 schaltbares Schaltventil 12 mit der Gasabzugsleitung 2 koppelbar ist.

In der Bypassleitung 8 ist weiter ein Ausgleichsbehälter 9 angeordnet.

Der Rohrquerschnitt, der den Pyrolyseölauffangbehälter 4 mit dem Gassammler 5 verbindet, ist kleiner als der Querschnitt der Kühlschlange 3.1 bzw. 3.2 und der Querschnitt der Kühlschlangen 3.1, 3.2 ist jeweils kleiner als der der Gasabzugsleitung 2.

Der mit dem Verdichter 6 einstellbare Systemdruck liegt bevorzugt unter 60 mbar.

Der mit dem verschwelbaren Gut gefüllte Reaktorbehälter 1 wird auf eine Innentemperatur zwischen 420°C - 620°C im Reaktorofen erhitzt, wobei die Pyrolysegastemperatur in der Gasabzugsleitung 2 mit dem Temperatursensor 7 detektiert wird und die Steuereinheit 13 diese Temperatur über die Pyrolysedauer konstant hält. Mit Erreichen der Innentemperatur im Reaktorbehälter 1 zwischen 420°C und 620°C wird, angesteuert durch die Steuereinheit 13, durch den Verdichter 6 ein konstanter oder nahezu konstanter Systemdruck von kleiner 60 mbar eingestellt, was zu einem konstanten oder nahezu konstanten Volumenstrom des Pyrolysegases aus dem Reaktorbehälter 1 bei gleichzeitig erhöhter Verweildauer des Pyrolysegases im Reaktorbehälter 1 führt.

Wenn durch den Temperatursensor 7 das Überschreiten einer vorgegebenen Temperatur aus dem Bereich zwischen 450°C - 620°C detektiert und der Steuereinheit 13 signalisiert wird, öffnet die Steuereinheit 13 als Reaktion auf dieses Signal das Ventil 10 in die Bypassleitung 8, so dass ein Teil der heißen Pyrolysegase in die Bypassleitung 8 und den hier vorhandenen Ausgleichsbehälter 9 strömen.

Zeitverzögert wird durch die Steuereinheit 13 das Schaltventil 12 des Ableitrohres 11 geöffnet und das Ventil 10 in die Bypassleitung 8 geschlossen, so dass kühles nichtkondensierbares Gas aus der mit dem Ableitrohr 11 verbundenen Kühlschlange 3.2 in den Reaktorbehälter 1 gedrückt wird und sich eine Temperatur unterhalb der vorgegebenen Temperatur aus dem Bereich zwischen 450°C - 620°C einstellt.

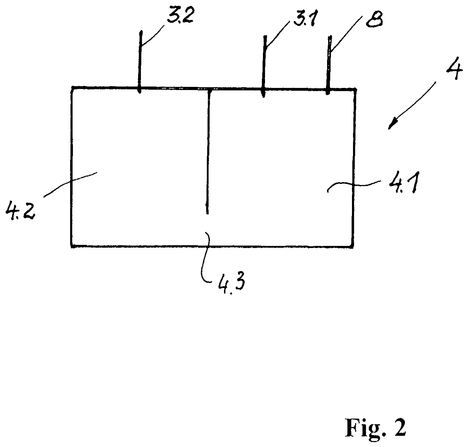

**Fig. 2** zeigt den Pyrolysölauffangbehälter 4 in einer bevorzugten Ausführung mit zwei Kammern 4.1, 4.2, die bodenseitig miteinander verbunden sind. Durch die Verwendung eines solchen Pyrolysölauffangbehälters mit zwei Kammern 4.1, 4.2 ist verfahrensseitig eine kurzzeitige Druckerhöhung in der Kammer 4.1 des Pyrolyseölauffangbehälters 4, in die die Bypassleitung 8 mündet, erzielbar, so dass Pyrolyseöl in die andere Kammer 4.2 überströmt, wodurch nichtkondensierbare Gase in der Kühlschlange 3.2, die in diese Kammer 4.2 mündet, in die entgegengesetzte Volumenstromrichtung und damit über das Ableitrohr 11 in die Gasabzugsleitung 2 und den Reaktorbehälter 1 gedrückt werden.

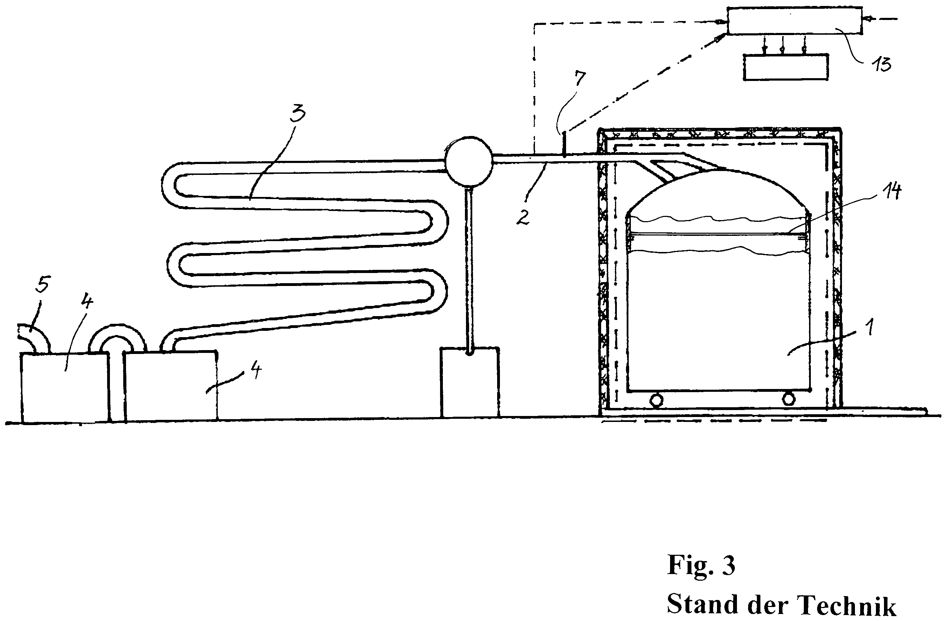

**Fig. 3** zeigt den Stand der Technik gemäß DE 10 2008 030 983 B4 zur Durchführung einer Mitteltemperaturpyrolyse, die mit der vorliegenden Erfindung verbessert wird, mit einem zylinderförmigen Pyrolyseofen, dessen Innenflächen mit einer Isolierschicht aus einem anorganischen Wärmedämmstoff versehen sind, wobei auf oder an den Innenflächen der Isolierschichten Heizelemente angeordnet sind, mit dem in den Pyrolyseofen einbringbaren Reaktorbehälter 1 zylinderförmiger Form, der oben offen und mit einem Deckel in Form eines gewölbten Bodens, verschließbar ist, wobei der Deckel mindestens eine mit einer Gasabzugsleitung 2 aus dem Pyrolyseofen verbindbare Gasaustrittsöffnung aufweist und im Reaktorbehälter 1 oberhalb des zu verschwelenden Gutes ein Prallblech 14 zum Abtrennen von hochreinem Feinruß angeordnet ist, das seitlich an der Reaktorbehälterwand abgestützt ist,
mit mindestens einer mit der Gasabzugsleitung 2 verbundenen Kühlschlange 3 zum Kondensieren des Pyrolyseöles,
mit mindestens einem Pyrolyseölauffangbehälter 4 und mit einem Gassammler 5 für das verbleibende Gas,
sowie
mit einer Steuereinheit 13 zur Steuerung und Regelung der Heizelemente, wobei die Steuereinheit 13 mit mindestens einem Temperatursensor 7 zur Bestimmung der Pyrolysegastemperatur gekoppelt ist, derart, dass in Abhängigkeit von der vorgegebenen Pyrolysegastemperaturen eine stufenweise Reduzierung der Aufheizleistung von Heizelementen bis hin zum Ausschalten aller Heizelemente steuert oder regelbar ist.

### Bezugszeichenliste

- 1: Reaktorbehälter
- 2: Gasabzugsleitung
- 3: Kühlschlange
- 3.1: Kühlschlange
- 3.2: Kühlschlange
- 4: Pyrolyseölauffangbehälter
- 4.1: Kammer 1
- 4.2: Kammer 2
- 4.3: bodenseitige Kammerverbindung
- 5: Gassammler
- 6: Verdichter
- 7: Temperatursensor
- 8: Bypassleitung
- 9: Ausgleichsbehälter
- 10: Ventil in die Bypassleitung
- 11: Ableitrohr
- 12: Schaltventil des Ableitrohres
- 13: Steuereinheit
- 14: Prallblech

## Patentansprüche

1. Vorrichtung zur Durchführung einer Mitteltemperaturpyrolyse mit einem in einem Pyrolyseofen auf eine Temperatur bis 620°C erhitzbaren Reaktorbehälter (1) zylinderförmiger Form, der oben offen und mit einem Deckel verschließbar ist, wobei der Deckel mindestens eine mit einer Gasabzugsleitung (2) aus den Pyrolyseofen verbindbare Gasaustrittsöffnung aufweist und unterhalb des Deckels mindestens ein sich an der Reaktorbehälterinnenwand abstützendes gelochtes Prallblech befindet,
mit mindestens einer mit der Gasabzugsleitung (2) verbundenen Kühlschlange (3) zum Kondensieren des Pyrolyseöls,
mit der Kühlschlange nachgeordnet mindestens einem Pyrolyseölauffangbehälter (4) und mit einem Gassammler (5) für das verbleibende Gas sowie
mit einer Steuereinheit (13) zur Steuerung und Regelung der Heiztemperatur, wobei die Steuereinheit (13) mindestens mit einem Temperatursensor (7) zur Bestimmung der Pyrolysegastemperatur in der Gasabzugsleitung (2) nahe dem Austritt der Gasabzugsleitung (2) aus dem Pyrolyseofen gekoppelt ist,
**dadurch gekennzeichnet, dass**
dem Gassammler (5) ein Verdichter (6) nachgeordnet ist, der ab dem Erreichen einer vorgegebenen und von dem Temperatursensor (7) detektierten Pyrolysegastemperatur gesteuert von der Steuereinheit (13) einen konstanten Volumenstrom des Pyrolysegases aus dem Reaktorbehälter (1) bei einem konstanten Systemdruck einstellt.

2. Vorrichtung nach Anspruch 1, **dadurch gekennzeichnet, dass**
zwei Kühlschlangen (3.1, 3.2) mit der Gasabzugsleitung (2) verbunden sind, die in unterschiedliche aber miteinander bodenseitig verbundene Kammern (4.1, 4.2) des Pyrolyseölauffangbehälters (4) münden und eine Bypassleitung (8) zu den Kühlschlangen (3.1, 3.2) angeordnet ist, die über ein von der Steuereinheit (13) gesteuertes Ventil (10) mit der Gasabzugsleitung (2) koppelbar ist und die in eine Kammer (4.1) des Pyrolyseölauffangbehälters (4) mündet,
wobei die Kühlschlange (3.2), die in die andere Kammer (4.2) des Pyrolyseölauffangbehälters (4) mündet, eingangsseitig ein Ableitrohr (11) aufweist, das durch ein durch die Steuereinhet schaltbares Schaltventil (12) mit der Gasabzugsleitung (2) koppelbar ist.

3. Vorrichtung nach Anspruch 2, **dadurch gekennzeichnet, dass**
in der Bypassleitung (8) ein Ausgleichsbehälter (9) angeordnet ist.

4. Vorrichtung nach einem der Ansprüche 1 bis 3, **dadurch gekennzeichnet, dass**
der Rohrquerschnitt, der den Pyrolyseölauffangbehälter (4) mit dem Gassammler (5) verbindet, kleiner ist als der Querschnitt der Kühlschlange (3.1 und 3.2) und der Querschnitt der Kühlschlangen (3.1, 3.2) jeweils kleiner ist als der der Gasabzugsleitung (2).

5. Verfahren zum Betrieb einer Vorrichtung nach einem der Ansprüche 1 bis 4, wobei
der mit verschwelbarem Gut gefüllte Reaktorbehälter auf eine Temperatur zwischen 420°C - 620°C im Reaktorofen erhitzt wird, wobei die Pyrolysegastemperatur in der Gasabzugsleitung detektiert wird und die Steuereinheit diese Temperatur über die Pyrolysedauer konstant hält
mit Erreichen der Innentemperatur zwischen 420°C und 620°C durch den durch die Steuereinheit gesteuerten Verdichter ein konstanter Systemdruck von kleiner 60 mbar eingestellt wird, was zu einem konstanten Volumenstrom des Pyrolysegases aus dem Reaktorbehälter bei gleichzeitig erhöhter Verweildauer des Pyrolysegases im Reaktorbehälter führt.

6. Verfahren nach Anspruch 5, **dadurch gekennzeichnet, dass**
durch den Temperatursensor das Überschreiten einer vorgegebenen Temperatur aus einem Bereich zwischen 420°C - 620°C detektiert und der Steuereinheit signalisiert wird, die Steuereinheit als Reaktion auf dieses Signal das Ventil in die Bypassleitung öffnet, so dass ein Teil der heißen Pyrolysegase in den Bypass und den hier vorhandenen Ausgleichsbehälter strömen,
zeitverzögert durch die Steuereinheit das Schaltventil des Ableitrohres geöffnet und das Ventil in die Bypassleitung geschlossen wird, so dass kühles nichtkondensierbares Gas aus der mit dem Ableitrohr verbundenen Kühlschlange in den Reaktorbehälter gedrückt wird und sich eine Temperatur unterhalb der vorgegebenen Temperatur aus dem Bereich zwischen 420°C - 620°C einstellt.

7. Verfahren nach Anspruch 6, **dadurch gekennzeichnet, dass**
durch eine kurzzeitige Druckerhöhung in der Kammer des Pyrolyseölauffangbehälters, in die die Bypassleitung mündet, Pyrolyseöl in die andere Kammer überströmt wodurch nicht kondensierbare Gase in der Kühlschlange, die in diese Kammer mündet in die entgegengesetzte Volumenstromrichtung und damit über das Ableitrohr in die Gasabzugsleitung und den Reaktorbehälter gedrückt werden.

## Claims

1. A device for carrying out medium temperature pyrolysis, comprising: a reactor vessel (1) of cylindrical shape heatable in a pyrolysis furnace to a temperature of up to 620°C and being open at the top and closable with a cover, wherein the cover has at least one gas outlet opening connectable to a gas offtake line (2) from the pyrolysis furnace and at least one perforated baffle plate supported against the reactor vessel internal wall is located below the cover,
at least one cooling coil (3) connected to the gas offtake line (2) for condensing the pyrolysis oil,
at least one pyrolysis oil collecting vessel (4) arranged downstream of the cooling coil and comprising a gas collector (5) for the remaining gas and
a control unit (13) for controlling and regulating the heating temperature, wherein the control unit (13) is coupled at least to a temperature sensor (7) for determining the pyrolysis gas temperature in the gas offtake line (2) close to the outlet of the gas offtake line (2) from the pyrolysis furnace,
**characterized in that**
a compressor (6) is arranged downstream of the gas collector (5), which compressor, once a predetermined pyrolysis gas temperature detected by the temperature sensor (7) has been reached, establishes a constant volumetric flow rate for the pyrolysis gas from the reactor vessel (1) at a constant system pressure, under the control of the control unit (13).

2. The device according to Claim 1, **characterized in that**
two cooling coils (3.1, 3.2) are connected to the gas offtake line (2), which lead into different chambers (4.1, 4.2), connected to one another at the bottom, of the pyrolysis oil collecting vessel (4), and a bypass line (8) in relation to the cooling coils (3.1, 3.2) is arranged which is couplable via a valve (10) controlled by the control unit (13) to the gas offtake line (2) and which leads into one chamber (4.1) of the pyrolysis oil collecting vessel (4),
wherein the cooling coil (3.2) which leads into the other chamber (4.2) of the pyrolysis oil collecting vessel (4) has a diverter pipe (11) on the inlet side, which is couplable to the gas offtake line (2) by a switching valve (12) switchable by the control unit.

3. The device according to Claim 2, **characterized in that**
an equalization vessel (9) is arranged in the bypass line (8).

4. The device according to any one of Claims 1 to 3, **characterized in that**
the pipe cross-section which connects the pyrolysis oil collecting vessel (4) to the gas collector (5) is smaller than the cross-section of the cooling coil (3.1 and 3.2), and the cross-section of the cooling coils (3.1, 3.2) is in each case smaller than that of the gas offtake line (2).

5. A method for operating a device according to any one of Claims 1 to 4, wherein
the reactor vessel filled with carbonizable material is heated to a temperature of between 420°C and 620°C in the reactor furnace, wherein the pyrolysis gas temperature is detected in the gas offtake line and the control unit keeps this temperature constant for the duration of pyrolysis,
and, once the internal temperature of between 420°C and 620°C is reached, a constant system pressure of less than 60 mbar is established by the compressor controlled by the control unit, this leading to a constant volumetric flow rate for the pyrolysis gas out of the reactor vessel with a simultaneously increased residence time of the pyrolysis gas in the reactor vessel.

6. The method according to Claim 5, **characterized in that**
the temperature sensor detects if a predetermined temperature from a range between 420°C and 620°C is exceeded and signals this to the control unit, in response to this signal the control unit opens the valve into the bypass line, such that a proportion of the hot pyrolysis gases flows into the bypass and the equalization vessel present here, and
with a time delay caused by the control unit, the switching valve of the diverter pipe is opened and the valve into the bypass line closed, such that cool, non-condensable gas is forced out of the cooling coil connected to the diverter pipe into the reactor vessel and a temperature below the predetermined temperature from the range between 420°C and 620°C is established.

7. The method according to Claim 6, **characterized in that**
as a result of a brief increase in pressure in the chamber of the pyrolysis oil collecting vessel into which the bypass line leads, pyrolysis oil overflows into the other chamber, whereby non-condensable gases in the cooling coil leading into this chamber are forced in the opposite volumetric flow direction and thus via the diverter pipe into the gas offtake line and the reactor vessel.

## Revendications

1. Dispositif de mise en oeuvre d'une pyrolyse à température moyenne comportant : une cuve du réacteur (1) de forme cylindrique pouvant être chauffée dans un four à pyrolyse à une température atteignant jusqu'à 620°C, laquelle est ouverte vers le haut et peut être fermée par un couvercle, le couvercle comportant au moins une ouverture de sortie de gaz pouvant être raccordée à une conduite d'évacuation de gaz (2) partant du four à pyrolyse et au moins une tôle de chicane perforée prenant appui sur la paroi interne de cuve du réacteur se trouvant au-dessous du couvercle ,
au moins un serpentin de réfrigération (3), raccordé à la conduite d'évacuation de gaz (2), destiné à condenser l'huile de pyrolyse,
au moins un récipient de récupération d'huile de pyrolyse (4), disposé en aval du serpentin de réfrigération , et un collecteur de gaz (5) pour le gaz restant , ainsi que
une unité de commande (13), destinée à la commande et à la régulation de la température de chauffage, l'unité de commande (13) étant couplée au moins à un capteur de température (7) destiné à déterminer la température du gaz de pyrolyse dans la conduite d'évacuation de gaz (2) à proximité de la sortie de la conduite d'évacuation de gaz (2) du four à pyrolyse,
caractérisé en ce q'
un compresseur (6) est monté en aval du collecteur de gaz (5), ledit compresseur règle, après atteinte d'une température de gaz de pyrolyse prédéterminée et détectée par le capteur de température (7), un débit volumétrique constant du gaz de pyrolyse de la cuve du réacteur (1) à une pression du système constante, commandée à l'aide de l'unité de commande (13).

2. Dispositif selon la revendication 1, **caractérisé en ce que**
deux serpentins de réfrigération (3.1, 3.2) sont raccordés à la conduite d'évacuation de gaz (2), lesquels débouchent dans des chambres (4.1, 4.2) différentes, mais raccordées l'une à l'autre côté fond, du récipient de récupération d'huile de pyrolyse (4) et qu'une conduite de dérivation (8) est associée aux serpentins de réfrigération (3.1, 3.2), laquelle peut être couplée, par l'intermédiaire d'une vanne (10) commandée à l'aide de l'unité de commande (13), avec la conduite d'évacuation de gaz (2) et laquelle débouche dans une chambre (4.1) du récipient de récupération d'huile de pyrolyse (4),
le serpentin de réfrigération (3.2), lequel débouche dans l'autre chambre (4.2) du récipient de récupération d'huile de pyrolyse (4), comportant côté entrée un tuyau d'évacuation (11), lequel peut être couplé, à l'aide d'une vanne de commutation (12), pouvant être commutée à l'aide de l'unité de commande, à la conduite d'évacuation de gaz (2).

3. Dispositif selon la revendication 2, **caractérisé en ce qu'**
un récipient de compensation (9) est disposé dans la conduite de dérivation (8).

4. Dispositif selon l'une quelconque des revendications 1 à 3, **caractérisé en ce que**
la section transversale tubulaire qui relie le récipient de récupération d'huile de pyrolyse (4) au collecteur de gaz (5) est inférieure à la section transversale du serpentin de réfrigération (3.1 et 3.2), et la section transversale des serpentins de réfrigération (3.1, 3.2) est inférieure à la section transversale de la conduite d'évacuation de gaz (2).

5. Procédé de fonctionnement d'un dispositif selon l'une quelconque des revendications 1 à 4,
la cuve du réacteur, remplie de produit pouvant être incandescendé, étant chauffée dans le four du réacteur à une température dans une plage comprise entre 420°C et 620°C, la température du gaz de pyrolyse étant détectée dans la conduite d'évacuation de gaz et l'unité de commande maintenant ladite température constante lors de la pyrolyse,
après atteinte de la température interne dans une plage entre 420°C et 620°C, au moyen du compresseur commandé à l'aide de l'unité de commande, une pression du système constante inférieure à 60 mbar étant réglée, ce qui entraîne un débit volumétrique constant du gaz de pyrolyse de la cuve du réacteur tout en augmentant la durée de séjour du gaz de pyrolyse dans la cuve du réacteur.

6. Procédé selon la revendication 5, **caractérisé en ce que** le dépassement d'une température prédéterminée dans une plage comprise entre 420°C et 620°C est détectée à l'aide du capteur de température et signalée à l'unité de commande, l'unité de commande, en réponse audit signal, ouvre la vanne dans la conduite de dérivation de telle sorte qu'une partie des gaz de pyrolyse chauds s'écoule dans la dérivation et dans ledit récipient de compensation,
retardées par l'unité de commande, la vanne de commutation de la conduite de dérivation est ouverte et la vanne dans la conduite de dérivation est fermée de telle sorte qu'un gaz non condensable froid est pressé à partir du serpentin de réfrigération raccordé au tuyau d'évacuation dans la cuve du réacteur et qu'une température inférieure à la température prédéterminée dans la plage comprise entre 420°C et 620°C se règle.

7. Procédé selon la revendication 6, **caractérisé en ce qu'**
au moyen d'une augmentation temporaire de pression dans la chambre du récipient de récupération d'huile de pyrolyse, dans laquelle débouche la conduite de dérivation, l'huile de pyrolyse s'écoule dans l'autre chambre, ce qui entraîne que des gaz non condensables dans le serpentin de réfrigération qui débouche dans ce chambre sont pressés dans le sens opposé au débit volumétrique et sont ainsi pressés à travers le tuyau d'évacuation dans la conduite d'évacuation de gaz et dans le la cuve du réacteur.
